# EUROPÄISCHE PATENTSCHRIFT

(11) **EP 4 244 490 B1**
(45) Veröffentlichungstag und Bekanntmachung des Hinweises auf die Patenterteilung: **18.12.2024**
(21) Anmeldenummer: 21805457.5
(22) Anmeldetag: 02.11.2021
(51) Int. Cl.: F16B 13/06

(54) **SPREIZANKER UND VERFAHREN ZU SEINER VERANKERUNG**
EXPANSION ANCHOR AND METHOD FOR ANCHORING SAME
DISPOSITIF D'ANCRAGE À EXPANSION ET SON PROCÉDÉ D'ANCRAGE

(30) Priorität: 13.11.2020 DE 102020129959
(43) Veröffentlichungstag der Anmeldung: 20.09.2023
(73) Patentinhaber: fischerwerke GmbH & Co. KG, 72178 Waldachtal (DE)
(72) Erfinder: HACKER, Oliver, 72227 Egenhausen (DE); WÄLDER, Jonas, 71069 Sindelfingen (DE); ECHLE, Benjamin, 77776 Schapbach (DE); SEEGER, Wolfgang, 72280 Dornstetten (DE); LINKA, Martin, 72160 Horb a.N. (DE)
(86) Internationale Anmeldenummer: PCT/EP2021/080294
(87) Internationale Veröffentlichungsnummer: WO 2022/101049

(56) Entgegenhaltungen:
- EP-A1- 0 099 028
- EP-A1- 0 168 349
- EP-A1- 1 335 140
- EP-A1- 3 620 669
- EP-A2- 0 510 906
- WO-A1-2020/011590
- CH-A5- 624 738
- DE-A1- 102004 010 727
- DE-A1- 102007 039 087
- US-A- 1 469 669

## Beschreibung

Die Erfindung betrifft einen Spreizanker mit den Merkmalen des Oberbegriffs des Anspruchs 1 und ein Verfahren zur Verankerung des Spreizankers mit den Merkmalen des Oberbegriffs des Anspruchs 14.

Die Patentanmeldung EP 0 099 028 A1 offenbart einen Spreizanker mit einer Spreizhülse, einem Ankerschaft und einem kegelstumpfförmigen, koaxial an einem Ende des Ankerschafts angeordneten Spreizkörper. Die Spreizhülse ist an einem durchmesserkleineren Ende des Spreizkörpers axial verschieblich auf dem Ankerschaft angeordnet. Durch Längsschlitze, die an einem vorderen, dem Spreizkörper zugewandten Ende offen sind, ist die Spreizhülse in Spreizlaschen unterteilt, die sich über einen begrenzten Axialabschnitt der Spreizhülse erstrecken. Über schmale Verbindungsstege gehen die Spreizlaschen an ihren dem Spreizkörper abgewandten hinteren Enden in einen hülsenförmigen Verbindungsabschnitt über, der die Spreizlaschen miteinander verbindet.

Zum Aufspreizen wird der Spreizkörper zwischen die Spreizlaschen gezogen und drückt sie aufgrund seiner Konusform auseinander, was als "Aufspreizen der Spreizlaschen" bezeichnet wird und auch als "Aufspreizen der Spreizhülse" beziehungsweise als "Aufspreizen des Spreizankers" aufgefasst werden kann. In einem insbesondere zylindrischen Ankerloch drückt der zwischen die Spreizlaschen gezogene Spreizkörper die Spreizlaschen nach außen gegen eine Lochwand des Ankerlochs, so dass der Spreizanker durch Kraftschluss und gegebenenfalls zusätzlich durch Formschluss zwischen den Spreizlaschen der Spreizhülse und der Lochwand im Ankerloch gehalten ist, was als Verankerung des Spreizankers im Ankerloch beziehungsweise in einem Ankergrund, in dem das Ankerloch angebracht ist, aufgefasst werden kann.

Aus der US 1 469 669 A ist ein Bolzenanker bekannt, der einen Spreizkörper und eine Spreizhülse aufweist.

Aufgabe der Erfindung ist, eine Verankerung eines Spreizankers der vorstehend erläuterten Art in einem Ankerloch zu verbessern.

Diese Aufgabe wird erfindungsgemäß durch die Merkmale des Anspruchs 1 gelöst. Der erfindungsgemäße Spreizanker weist einen Spreizkörper und eine Spreizhülse auf. Außer kegelstumpfförmig kann der Spreizkörper beispielsweise auch pyramidenstumpfförmig oder keilförmig sein, er kann ballige oder hohlrunde Umfangsflächen oder auch eine oder mehrere Stufen aufweisen. Grundsätzlich hat der Spreizkörper eine Form, die Spreizlaschen der Spreizhülse radial auseinander drückt, das heißt aufspreizt, wenn der Spreizkörper zwischen die Spreizlaschen oder umgekehrt die Spreizlaschen auf den Spreizkörper bewegt werden.

Die Spreizhülse ist durch Längsschlitze in die Spreizlaschen unterteilt, wobei die Längsschlitze vorzugsweise an einem vorderen, dem Spreizkörper zugewandten Ende offen sind, so dass die Spreizlaschen an ihren vorderen, dem Spreizkörper zugewandten Enden frei sind. Die Längsschlitze können achsparallel oder in einem Winkel zu Achsparallelen der Spreizhülse verlaufen, wobei sich der Winkel auf einer Länge der Längsschlitze ändern kann. Beispielsweise können die Längsschlitze wendelförmig, wellenförmig oder zickzack-förmig verlaufen. Ein Axialabschnitt der Spreizhülse, über den sich die Spreizlaschen erstrecken, wird hier als Spreizbereich der Spreizhülse bezeichnet.

Ein Verbindungsabschnitt der Spreizhülse verbindet die Spreizlaschen. Der Verbindungsabschnitt befindet sich insbesondere außerhalb der Spreizlaschen und vorzugsweise an einem dem Spreizkörper fernen, hinteren Ende der Spreizlaschen. Der Verbindungsabschnitt ist ein beispielsweise rohrförmiger oder hülsenförmiger Axialabschnitt der Spreizhülse an dem hinteren Ende der Spreizlaschen.

Die Erfindung sieht eine Formschlussverbindung benachbarter Spreizlaschen und oder der Spreizlaschen mit dem Verbindungsabschnitt der Spreizhülse vor, die die benachbarten Spreizlaschen miteinander oder die Spreizlaschen mit dem Verbindungsabschnitt durch einen in einer Längsrichtung der Spreizhülse wirkenden Formschluss verbindet. Die Formschlussverbindung kann spielfrei sein oder Spiel aufweisen. Letzteres bedeutet eine begrenzte Beweglichkeit der Spreizlaschen in der Längsrichtung der Spreizhülse zueinander und/oder zu dem Verbindungsabschnitt der Spreizhülse. Der Formschluss zwischen den benachbarten Spreizlaschen verhindert oder - wenn er Spiel aufweist - begrenzt eine Bewegung benachbarter Spreizlaschenränder der benachbarten Spreizlaschen zueinander in der Längsrichtung der Spreizhülse. Dadurch können sich die Spreizlaschen beim Aufspreizen nicht oder jedenfalls weniger in einer Umfangsrichtung der Spreizhülse beziehungsweise des Spreizkörpers bewegen. Das Aufspreizen der Spreizlaschen wird nicht oder jedenfalls weniger dadurch verringert, dass die Spreizlaschen beim Aufspreizen einer Bewegung in der Längsrichtung in Bezug zum Spreizkörper durch eine Bewegung in der Umfangsrichtung ausweichen. Das Aufspreizen der Spreizlaschen und dadurch die Verankerung des Spreizankers in einem Ankerloch sind verbessert.

Wie erwähnt kann die Formschlussverbindung zwischen den Spreizlaschen und/oder zwischen den Spreizlaschen und dem Verbindungsabschnitt spielfrei sein. Sofern sie Spiel aufweist, kann beispielsweise ein Spalt bestehen, der insbesondere höchstens halb so breit wie eine Wanddicke der Spreizhülse ist.

Zur Ausbildung der Formschlussverbindung zwischen den benachbarten Spreizlaschen sieht eine Ausgestaltung der Erfindung eine Verbindungslasche und eine Aussparung vor, in die die Verbindungslasche greift. Die Verbindungslasche steht in einer Umfangsrichtung der Spreizhülse von einer ersten Spreizlasche ab. Die Aussparung ist in einem der ersten Spreizlaschen zugewandten Spreizlaschenrand einer benachbarten, zweiten Spreizlasche und/oder in dem Verbindungsabschnitt der Spreizhülse angebracht. Der Eingriff der Verbindunglasche in die Aussparung verhindert oder begrenzt eine Bewegung der Verbindunglasche in der Längsrichtung der Spreizhülse und stabilisiert die Spreizlasche dadurch gegen eine Bewegung in der Umfangsrichtung der Spreizhülse. Die Verbindungslasche steht insbesondere 1/4 bis 1/3 so weit in der Umfangsrichtung der Spreizhülse über, wie die Spreizlaschen außerhalb der Formschlussverbindung breit sind.

Die Verbindungslasche kann sich auch schräg zur Umfangsrichtung und zur Längsrichtung der Spreizhülse erstrecken beziehungsweise einen oder mehrere schräg in einem Winkel zwischen insbesondere 30° und 60°, beziehungsweise in einem Winkel von insbesondere etwa 45°±5° oder 45°±10° zur Längsrichtung der Spreizhülse verlaufende Ränder aufweisen.

Eine Ausgestaltung der Erfindung sieht eine Verbindungslasche mit der Form eines schräg zur Umfangsrichtung und zur Längsrichtung der Spreizhülse angeordneten Rechtecks vor. Die Aussparung kann ebenfalls die Form eines solchen Rechtecks aufweisen oder beispielsweise auch dreieckförmig zur Aufnahme eines Eckbereichs der Verbindungslasche sein. Anders geformte Aussparungen sind nicht ausgeschlossen.

Erfindungsgemäß weist der Spreizanker Verbindungsstege auf, die die Spreizlaschen mit dem Verbindungsabschnitt der Spreizhülse verbinden, so dass die Spreizlaschen über die Verbindungsstege mit dem Verbindungsabschnitt und über den Verbindungsabschnitt miteinander verbunden sind. Die Verbindungsstege sind schmaler als die Spreizlaschen in der Umfangsrichtung der Spreizhülse breit sind. Die Verbindungsstege erleichtern das Aufspreizen und erhöhen die Gefahr, dass die Spreizlaschen einem Aufspreizen durch eine Bewegung in der Umfangsrichtung des Spreizkörpers ausweichen. Letzterem begegnet die Erfindung durch die Formschlussverbindung der benachbarten Spreizlaschen miteinander und/oder mit dem Verbindungsabschnitt der Spreizhülse. Die Verbindungsstege haben eine Breite von maximal 80 % der Breite der Spreizlaschen, insbesondere sind die Verbindungsstege höchstens 1/3 so breit wie die Spreizlaschen und vorzugsweise maximal 1/5 so breit wie die Spreizlaschen. Als untere Grenze kann insbesondere 1/10 der Breite der Spreizlaschen angesehen werden. Gemeint ist hier mit der "Breite der Spreizlaschen" die größte Breite in Umfangsrichtung der Spreizhülse außerhalb der Formschlussverbindungen.

Um Platz für die Aussparungen der Formschlussverbindung zu haben, sieht eine Ausgestaltung der Erfindung vor, die Verbindungsstege außermittig zu den Spreizlaschen anzuordnen. Die Verbindungsstege sind bei dieser Ausgestaltung der Erfindung in der Umfangsrichtung der Spreizhülse zu Längsmitten der Spreizlaschen versetzt. Die Verbindungsstege können bei Ausführungen der Erfindung auch unabhängig von der Formschlussverbindung außermittig zu den Spreizlaschen angeordnet sein.

Damit die Spreizhülse einen ausreichenden Halt in axialer Richtung in dem Ankerloch zu einem Einziehen des Spreizkörpers aufweist, sieht eine Ausgestaltung der Erfindung eine Dreh- und Schiebesicherungslasche vor, die radial nach außen über einer Mantelfläche der Spreizhülse übersteht und bereits bei nicht aufgespreizten Spreizlaschen in dem Ankerloch an der Lochwand des Ankerlochs anliegt. Als "Mantelfläche" ist die Umfangsfläche eines gedachten Zylinders anzunehmen, der den Verbindungsabschnitt der Spreizhülse umhüllt. Die radial nach außen überstehende Dreh- und Schiebesicherungslasche wirkt auch einem Drehen der Spreizhülse bei einer Beaufschlagung mit einem Drehmoment beim Aufspreizen entgegen.

Es kann die Verbindungslasche der Formschlussverbindung der Spreizlaschen zugleich auch die Dreh- und Schiebesicherungslasche bilden, indem sie so weit radial nach außen steht, dass sie in einem Ankerloch an der Lochwand des Ankerlochs anliegt. Die Formschlussverbindung zwischen den Spreizlaschen und/oder der Spreizlaschen mit dem Verbindungsabschnitt der Spreizhülse kann außerhalb des Ankerlochs bestehen oder beim Einbringen der Spreizhülse in das Ankerloch entstehen, indem die radial nach außen stehende Verbindungslasche, die zugleich die Dreh- und Schiebesicherungslasche bildet, von der Lochwand des Ankerlochs radial nach innen in die Aussparung im zugewandten Spreizlaschenrand der benachbarten Spreizlasche und/oder im Verbindungsabschnitt gedrückt wird.

Die Spreizhülse des erfindungsgemäßen Spreizankers ist insbesondere aus einem Blech gestanzt oder in anderer Weise, beispielsweise durch Laserschneiden, aus dem Blech getrennt und zu der Spreizhülse gebogen. Beim Stanzen oder der anderweitigen Bearbeitung werden vorzugsweise auch die Schlitze, Aussparungen und so weiter in der Spreizhülse hergestellt.

Damit sich die Spreizlaschen beim Aufspreizen mit insbesondere einem kegelstumpfförmigen Spreizkörper entsprechend der Kegelform in der Umfangsrichtung verbreitern können, sieht eine Ausgestaltung der Erfindung vor, dass die Spreizlaschen einen oder mehrere Stege aufweisen, die sich durch eine Formänderung der Stege, insbesondere durch Biegen der Stege, während des Aufspreizens in der Umfangsrichtung der Spreizhülse verlängern können. Eine Dehnung der Stege in ihrer Längsrichtung ist nicht vorgesehen, aber auch nicht ausgeschlossen. Die Stege können beispielsweise bogenförmig sein oder die Form eines Vs aufweisen, dessen Spitze in Längsrichtung der Spreizhülse weist. Bei einer Verbreiterung der Spreizlaschen verlängern sich die Stege in der Umfangsrichtung der Spreizhülse, indem der Bogen oder das V flacher wird. Allgemein ausgedrückt weisen die Stege mindestens einen Stegabschnitt auf, der in der Längsrichtung oder schräg zu der Längsrichtung der Spreizhülse, jedoch nicht ausschließlich, in der Umfangsrichtung verläuft. Der oder die Stege verlängern sich in der Umfangsrichtung der Spreizhülse, indem der Stegabschnitt durch Verformung des Stegs seine Lage mehr in Richtung der Umfangsrichtung der Spreizhülse ändert. Vorzugsweise weisen der oder die Stege mehrere einander entgegengesetzt bogenförmige oder entgegengesetzt schräge Stegabschnitte auf, die bei der Verlängerung des Stegs in der Umfangsrichtung der Spreizhülse entgegengesetzt schwenken.

Der oder die Stege können durch eine oder mehrere, die Spreizlaschen durchsetzende und axial zueinander versetzte Öffnungen gebildet sein.

Zu einer Verbesserung eines Halts in dem Ankerloch sieht eine Ausgestaltung der Erfindung eine oder mehrere Kanten an einer dem Spreizkörper abgewandten Außenseite der Spreizhülse vor. Die Kante befindet sich an einem Übergang einer Öffnung in einer Spreizlasche zur Außenseite der Spreizlasche, und zwar vorzugsweise an einer rückseitigen Kante, was bedeutet, dass sich die Außenseite der Spreizhülse von der Kante ausgehend in Richtung des vorderen, dem Spreizkörper zugewandten Endes der Spreizhülse erstreckt. Beim Aufspreizen formt sich die Kante in die Lochwand des Ankerlochs ein und erhöht den Halt der Spreizhülse im Ankerloch in axialer Richtung der Spreizhülse.

Von der Kante nach vorn in Richtung des vorderen Endes der Spreizhülse verläuft die Außenseite der Spreizhülse vorzugsweise schräg, und/oder bogenförmig nach innen. Die Schräge ist insbesondere mindestens so groß und vorzugsweise größer als ein Winkel, in dem eine Spreizfläche des Spreizkörpers schräg zur Achsrichtung des Spreizankers verläuft. Die Spreizfläche des Spreizkörpers ist die Fläche, auf der die Spreizlaschen gleiten, wenn der Spreizkörper zwischen sie gelangt. Diese Ausgestaltung stellt sicher, dass die Kante der Spreizlasche auch dann in die Lochwand des Ankerlochs gedrückt wird, wenn die Spreizlasche beim Aufspreizen nach außen geschwenkt wird. Die Außenseite der Spreizhülse kann auch erst in einem axialen Abstand von der Kante schräg nach innen verlaufen, wobei der Abstand vorzugsweise nicht größer als 1,5 mm oder 1 mm und vorzugsweise kleiner ist.

An vorderen, das heißt dem Spreizkörper zugewandten Rändern der Spreizhülse, der Spreizlaschen und/oder von Stegen der Spreizlaschen sieht eine bevorzugte Ausgestaltung der Erfindung eine Fase oder Rundung an einem Übergang zu einer dem Spreizkonus zugewandten Innenseite der Spreizhülse vor. Dadurch wird eine Kante an der Innenseite der Spreizhülse vermieden, die sich beim Aufspreizen in den Spreizkörper einformen und das Aufspreizen erschweren könnte. Ein Fasenwinkel ist vorzugsweise mindestens so groß wie der Winkel der Spreizfläche des Spreizkörpers zur Achse des Spreizankers, damit beim Aufspreizen keine vordere Kante an der Innenseite der Spreizhülse gegen den Spreizkörper stößt. Die Rundung am Übergang von der Innenseite der Spreizhülse zu dem oder den vorderen Rändern der Spreizhülse, Spreizlaschen und/oder Stege ist vorzugsweise entsprechend weit nach außen gezogen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine Ansicht eines erfindungsgemäßen Spreizankers;
- Figur 2: eine Vergrößerung des Spreizankers aus Figur 1;
- Figur 3: eine Abwicklung einer Spreizhülse des Spreizankers aus Figur 1;
- Figur 4: einen Achs-Halbschnitt der Spreizhülse aus Figur 3; und
- Figur 5: eine Vergrößerung des Achs-Halbschnitts der Spreizhülse aus Figuren 3 und 4.

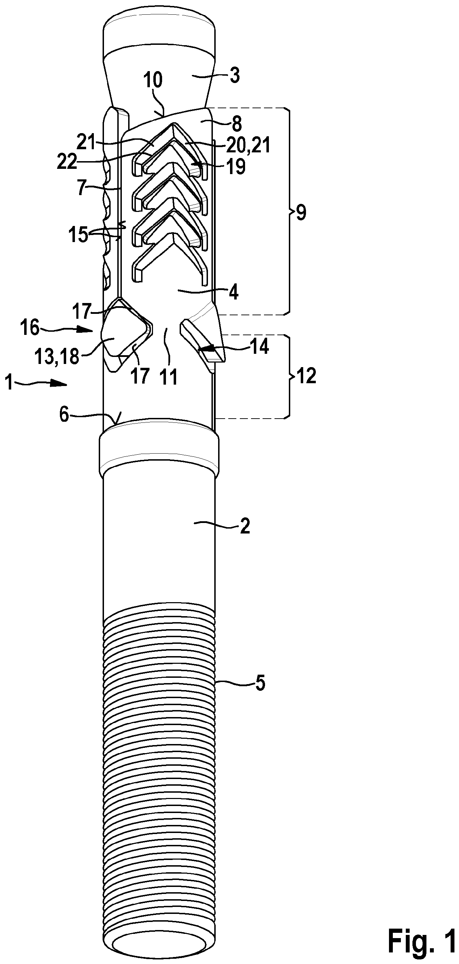

Der in Figur 1 dargestellte, erfindungsgemäße Spreizanker 1 weist einen Ankerschaft 2, einen Spreizkörper 3 und eine Spreizhülse 4 auf. Der Spreizkörper 3 ist im Ausführungsbeispiel kegelstumpfförmig und schließt mit seinem durchmesserkleineren Ende koaxial an den Ankerschaft 2 an, der im Anschluss an den Spreizkörper 3 den gleichen Durchmesser wie das durchmesserkleinere Ende des Spreizkörpers 3 aufweist. Im Ausführungsbeispiel sind der Ankerschaft 2 und der Spreizkörper 3 einstückig, sie können allerdings beispielsweise auch verschraubt oder vernietet sein.

An einem dem Spreizkörper 3 fernen, hinteren Ende weist der Ankerschaft 2 ein Außengewinde 5 auf.

Mit axialem Abstand von dem Spreizkörper 3 weist der Ankerschaft 2 eine Ringstufe als axiales Widerlager 6 für die Spreizhülse 4 auf. Die Spreizhülse 4 ist zwischen dem Spreizkörper 3 und dem Widerlager 6 axial verschiebbar auf dem Ankerschaft 2 angeordnet.

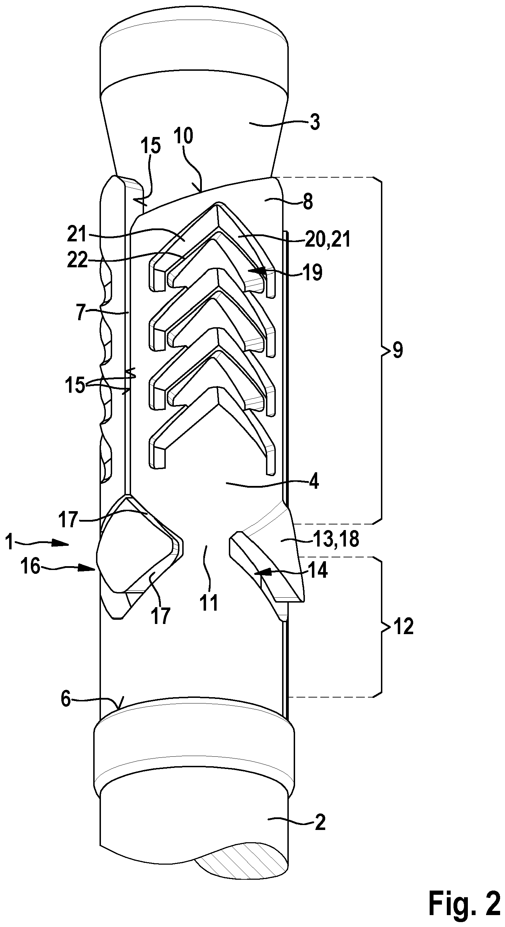

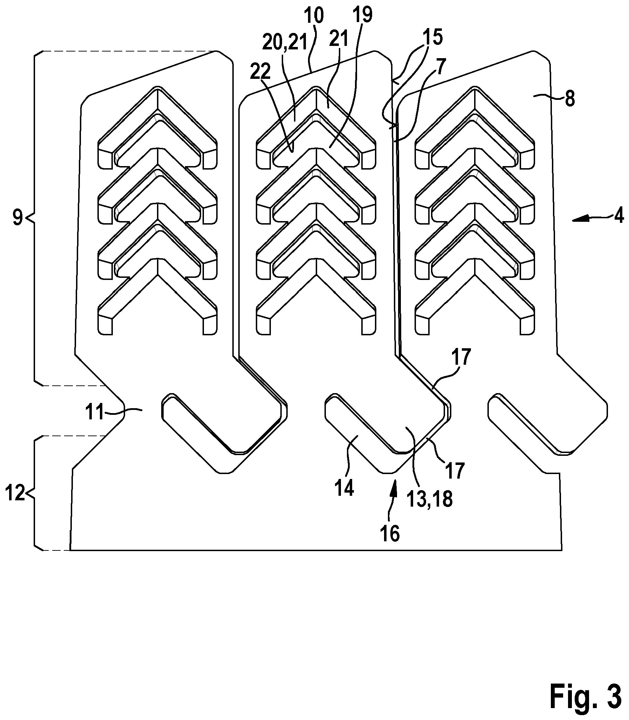

Die Spreizhülse 4 ist, wie in Figur 3 zu sehen, aus einem ebenen Blech gestanzt oder beispielsweise auch durch Laserschneiden aus dem ebenen Blech getrennt und zu der in Figuren 1 und 2 gezeigten, zylinderrohrförmigen Hülse gebogen.

Die Spreizhülse 4 weist Längsschlitze 7 auf, die sie in Spreizlaschen 8 unterteilen, die sich in einer Längsrichtung der Spreizhülse 4 erstrecken und in Umfangsrichtung der Spreizhülse 4 nebeneinander angeordnet sind. Die Längsschlitze 7 beginnen an einem vorderen Ende der Spreizhülse 4 und erstrecken sich - im Ausführungsbeispiel - über etwa 2/3 einer axialen Länge der Spreizhülse 4. Ein die Spreizlaschen 8 aufweisender axialer Abschnitt der Spreizhülse 4 wird hier als Spreizbereich 9 bezeichnet. Als vorderes Ende wird hier das dem Spreizkörper 3 zugewandte Ende der Spreizlaschen 8 und der Spreizhülse 4 bezeichnet. Im Ausführungsbeispiel verlaufen die Längsschlitze 7 achsparallel, sie können allerdings auch beispielsweise wendelförmig, wellenförmig oder zickzack-förmig verlaufen (nicht dargestellt).

Durch Einziehen des Spreizkörpers 3 zwischen die Spreizlaschen 8 werden die Spreizlaschen 8 vom Spreizkörper 3 radial auseinandergedrückt, was als Aufspreizen der Spreizlaschen 8 bezeichnet wird und auch als Aufspreizen der Spreizhülse 4 und des Spreizankers 1 aufgefasst werden kann. Zum Aufspreizen ist eine Relativbewegung zwischen der Spreizhülse 4 beziehungsweise den Spreizlaschen 8 und dem Spreizkörper 3 in axialer Richtung des Spreizankers 1 erforderlich, die Spreizlaschen 8 können auch durch Aufschieben auf den Spreizkörper 3 aufgespreizt werden.

Vordere Ränder 10 der Spreizlaschen 8 sind im Ausführungsbeispiel schräg zur Längsachse, was allerdings nicht zwingend für die Erfindung ist.

An hinteren, dem Spreizkörper 3 fernen Enden verjüngen sich die Spreizlaschen 8 zu Verbindungsstegen 11, die die Spreizlaschen 8 einstückig mit einem Verbindungsabschnitt 12 der Spreizhülse 4 verbinden. Der Verbindungsabschnitt 12 ist ein zylinderrohrförmiger Axialabschnitt der Spreizhülse 4 an einem dem Spreizkörper 3 fernen Ende der Spreizhülse 4, der die Spreizlaschen 8 über die Verbindungsstege 11 miteinander verbindet. Im Ausführungsbeispiel sind die Verbindungsstege 11 in einer Umfangsrichtung der Spreizhülse 4 weniger als halb so breit wie die Spreizlaschen 8, nämlich ungefähr 1/3 bis 1/4 so breit wie die Spreizlaschen 8. Die im Verhältnis zu den Spreizlaschen 8 schmaleren Verbindungsstege 11 erleichtern das Aufspreizen der Spreizlaschen 8.

An ihren hinteren Enden weisen die Spreizlaschen 8 Verbindunglaschen 13 auf, die in korrespondierende Aussparungen 14 in einem Spreizlaschenrand 15 einer benachbarten Spreizlasche 8 greifen. Im Ausführungsbeispiel reichen die Aussparungen 14 in der Längsrichtung der Spreizhülse 4 von den Spreizlaschen 8 bis in den Verbindungsabschnitt 12 der Spreizhülse 4, wobei auch Ausführungen der Spreizhülse 4 möglich sind, bei denen sich die Aussparungen 14 ausschließlich im Verbindungsabschnitt 12 oder jedenfalls außerhalb der Spreizlaschen 8 befinden (nicht dargestellt). Die Verbindungslaschen 13 und die Aussparungen 14 bilden in einer Längsrichtung der Spreizhülse 4 wirksame Formschlussverbindungen 16 zwischen benachbarten Spreizlaschen 8 beziehungsweise zwischen den Spreizlaschen 8 und dem Verbindungsabschnitt 12 der Spreizhülse 4. Die Formschlussverbindungen 16 wirken einem Schwenken der Spreizlaschen 8 mit ihren vorderen Rändern 10 in der Umfangsrichtung der Spreizhülse 4, beziehungsweise in der Umfangsrichtung des Spreizkörpers 3, um die Verbindungsstege 12 beim Einziehen des Spreizkörpers 3 zwischen die Spreizlaschen 8 entgegen.

Im Ausführungsbeispiel sind die Verbindungslaschen 13 rechteckig und in einem Winkel von 45° zur Längsrichtung beziehungsweise Achsrichtung und zur Umfangsrichtung der Spreizhülse 4 angeordnet, wobei die Verbindunglaschen 13 an einer Seite des Rechtecks einstückig in eine erste Spreizlasche 8 übergehen und mit ihren anderen drei Seiten in die Aussparung 14 einer benachbarten, zweiten Spreizlasche 8 greifen, die zusammen mit der Spreizlasche 8 die Formschlussverbindung 16 zwischen den benachbarten Spreizlaschen 8 beziehungsweise zwischen der ersten Spreizlasche 8 und dem Verbindungsabschnitt 12 der Spreizhülse 4 bilden. Andere Formen und Ausrichtungen der Verbindungslaschen 13 und der Aussparungen 14 sind möglich. Beispielsweise können die Verbindungslaschen 13 in einer anderen Richtung, beispielsweise in der Umfangsrichtung der Spreizhülse 4, ausgerichtet sein (nicht dargestellt).

Bei einem Schwenken der Spreizlaschen 8 mit ihren vorderen Rändern 10 in der Umfangsrichtung der Spreizhülse 4 beziehungsweise in der Umfangsrichtung des Spreizkörpers 3 um die Verbindungsstege 11 an ihren hinteren Enden stößt ein Rand der Verbindungslaschen 13 gegen einen gegenüberliegenden Rand der jeweiligen Aussparung 14, wodurch eine Relativbewegung der Spreizlaschen 8 in der Längsrichtung der Spreizhülse 4 verhindert oder begrenzt wird, was das Schwenken der Spreizlaschen 8 in der Umfangsrichtung der Spreizhülse 4 beziehungsweise des Spreizkörpers 3 verhindert oder jedenfalls begrenzt.

Die Formschlussverbindungen 16 können spielfrei sein. Im Ausführungsbeispiel besteht ein kleiner Spalt 17 zwischen den Verbindungslaschen 13 und den Aussparungen 14, das heißt die Formschlussverbindungen 16 zwischen den Spreizlaschenrändern 15 weisen ein kleines Spiel auf. Der Spalt 17 ist an zwei Seiten der Verbindungslaschen 13 höchstens halb so breit wie eine Wanddicke der Spreizhülse 4, an einer dritten Seite ist der Spalt im Ausführungsbeispiel breiter und an der vierten Seite gehen die Verbindungslaschen 13 einstückig in die Spreizlaschen 8 über.

Im Ausführungsbeispiel stehen die Verbindungslaschen 13 ungefähr 1/4 der Breite der Spreizlaschen 8 an deren breitesten Stellen in der Umfangsrichtung der Spreizhülse 4 von den Spreizlaschen 8 ab. Die Verbindungslaschen 13 können in der Umfangsrichtung der Spreizhülse 4 auch kürzer sein, vorzugsweise stehen sie allerdings wie erwähnt ungefähr 1/4 der Breite der Spreizlaschen 8 oder mehr in der Umfangsrichtung der Spreizhülse 4 von den Spreizlaschen 8 ab.

Die Verbindungsstege 11 können mittig zu den Spreizlaschen 8 angeordnet sein, das heißt in einer Mitte zwischen den einander zugewandten Spreizlaschenrändern 15, wobei die Mitte zwischen den Spreizlaschenrändern 5 als Quermitte der Spreizlaschen 8 aufgefasst werden kann. Im Ausführungsbeispiel sind die Verbindungsstege 11 in der Umfangsrichtung der Spreizhülse 4 versetzt zu den Quermitten der Spreizlaschen 8 um Platz für die Formschlussverbindungen 16 zu schaffen.

Wie insbesondere in Figur 2 auf der rechten Seite der Spreizhülse 4 zu sehen, sind die Verbindungslaschen 13 schräg in einem spitzen Winkel zur Achsrichtung der Spreizhülse 4 nach außen gebogen, so dass - im Ausführungsbeispiel - eine hintere, dem Spreizkörper 3 ferne Ecke der Verbindungslaschen 13 um - im Ausführungsbeispiel - ungefähr die Wanddicke der Spreizhülse 4 radial über eine Mantelfläche der Spreizhülse 4 nach außen übersteht. Mit "Mantelfläche" ist hier eine gedachte Zylinderfläche mit dem Durchmesser der Spreizhülse 4 im Bereich des Verbindungsabschnitts 12 gemeint. Dadurch liegen die Verbindungslaschen 13 in einem nicht dargestellten, zylindrischen Ankerloch an und halten die Spreizhülse 4 in axialer Richtung so, dass der Spreizkörper 3 zum Aufspreizen zwischen die Spreizlaschen 8 gezogen oder allgemein bewegt werden kann. Zusätzlich halten die Verbindungslaschen 13 die Spreizhülse 4 gegen ein Drehen im Ankerloch, wenn beispielsweise beim Aufspreizen ein Drehmoment auf die Spreizhülse 4 wirkt. Dadurch dass die Verbindungslaschen 13 so weit radial nach außen abstehen, dass sie mit einer Vorspannung an einer Lochwand des Ankerlochs anliegen, bilden sie zugleich auch Dreh- und Schiebesicherungslaschen 18, die die Spreizhülse 4 gegebenenfalls mit begrenzter Kraft gegen eine Axialbewegung und eine Drehung in einem Ankerloch halten. Es sind auch Ausführungen der Erfindung möglich, bei der die Spreizhülse 4 andere Dreh- und Schiebesicherungslaschen als die Verbindungslaschen 13 aufweist (nicht dargestellt).

Die Spreizlaschen 8 weisen in der Längsrichtung der Spreizhülse 4 zueinander versetzte, V-förmige Öffnungen 19 auf, durch die in der Längsrichtung der Spreizhülse 4 zueinander versetzte, das heißt in der Längsrichtung der Spreizhülse 4 und der Spreizlasche 8 8 hintereinander angeordnete V-förmige Stege 20 in den Spreizlaschen 8 gebildet sind. Spitzen der Vs sind im Ausführungsbeispiel nach vorn gerichtet. Durch die V-Form weisen die Stege 20 zwei Stegabschnitte 21 beiderseits ihrer Spitzen auf, die entgegengesetzt schräg zur Längsrichtung der Spreizhülse 4 verlaufen. Durch ihre Form lassen die Stege 20 eine Verbreiterung der Spreizlaschen 8 zu, wenn sie aufgespreizt werden, so dass sich die Spreizlaschen 8 an die Konusform des Spreizkörpers 3 anpassen und dabei entsprechend der Konusform verbreitern können, wenn der Spreizkörper 3 zum Aufspreizen zwischen die Spreizlaschen 8 gezogen wird.

Es ist nicht notwendig, dass sich für die Verbreiterung der Spreizlaschen 8 die Stege 20 dehnen, sondern die Verbreiterung der Spreizlaschen 8 ist durch eine Formänderung der Stege 20 möglich. Dabei wird die V-Form der Stege 20 flacher und die Stegabschnitte 21 beiderseits der Spitzen der Vs schwenken so, dass ihre Winkel zur Umfangsrichtung der Spreizhülse 4 kleiner werden. Eine Verkleinerung der Winkel zur Umfangsrichtung der Spreizhülse 4 der schräg zur Umfangsrichtung und zur Längsrichtung der Spreizhülse 8 verlaufenden Stegabschnitte 21 der Stege 20 bedeutet eine Vergrößerung der Winkel der Stegabschnitte 21 zur Längsrichtung der Spreizhülse 4. Die Formänderung der Stege 20 zur Verbreiterung der Spreizlaschen 8 ist eine Biegung der Stege 20. Die Stege 20 können auch eine andere Form aufweisen, beispielsweise können die Stege 20 bogenförmig sein (nicht dargestellt). Ihre Form und Anordnung ist so gewählt, dass sie durch eine Formänderung ihre Länge beziehungsweise ihre Erstreckung in der Umfangsrichtung der Spreizhülse 4 vergrößern können, um die Verbreiterung der Spreizlaschen 8 beim Aufspreizen zu ermöglichen.

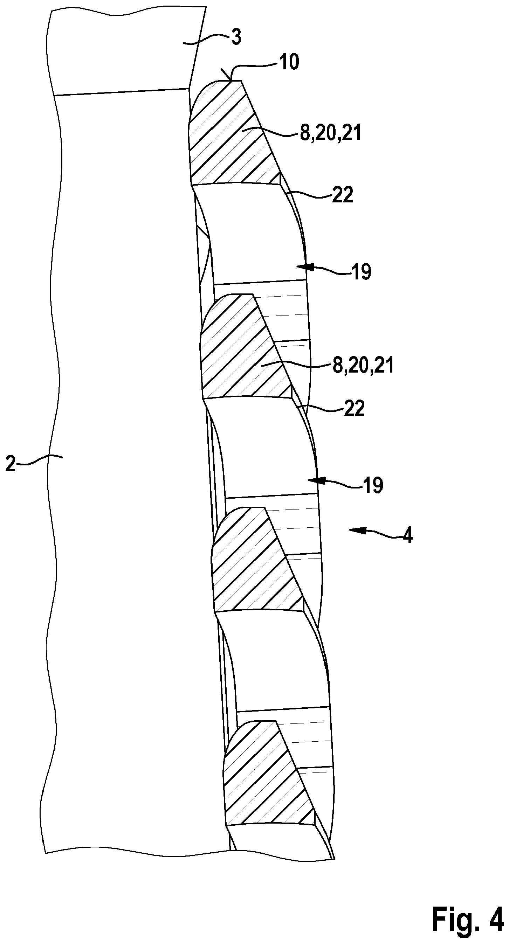

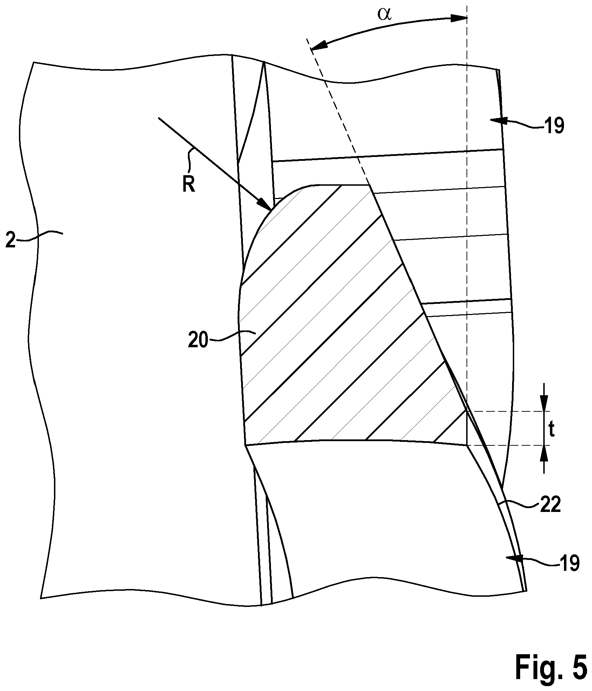

An einer dem Spreizkörper 3 und dem Ankerschaft 2 abgewandten Außenseite der Spreizhülse 4 sind Kanten 22 an dem Spreizkörper 3 abgewandten Rückseiten der Stege 20 am Übergang von den die Stege 20 bildenden Öffnungen 19 in den Spreizlaschen 8 zu den Außenseiten der Spreizlaschen 8 gebildet (Figuren 4 und 5). Im Ausführungsbeispiel weisen die Kanten 22 einen Kantenwinkel von 90° auf, wobei der Kantenwinkel insbesondere auch spitzer sein kann und vorzugsweise nicht stumpfer ist. Beim Aufspreizen der Spreizlaschen 8 in dem nicht dargestellten Ankerloch werden die Kanten 22 an den Rückseiten der Stege 20 vom Spreizkörper 3 radial nach außen gegen die Lochwand des Ankerlochs gedrückt und in die Lochwand eingeformt, wenn ein Ankergrund nicht zu hart ist. Die Kanten 22 erhöhen den Halt der aufgespreizten Spreizhülse 4 im Ankerloch und verbessern dadurch die Verankerung des Spreizankers 1.

Von den Kanten 22 an den Rückseiten der Stege 20 aus, in Richtung zum vorderen Ende der Spreizhülse 4, verlaufen die Außenseiten der Stege 20 schräg radial nach innen, wobei ein Winkel α zwischen den Außenseiten und der Achsrichtung der Spreizhülse 4 größer als die Hälfte eines Kegelwinkels des Spreizkörpers 3 ist, damit, wenn die Spreizlaschen 8 beim Aufspreizen radial nach außen geschwenkt werden, die Kanten 22 an den Rückseiten der Stege 20 an der Lochwand des Ankerlochs anliegen.

Vorzugsweise verlaufen die Außenseiten der Stege 20 unmittelbar ab den Kanten 22 schräg nach innen, um scharfe, schneidenartige Kanten 22 zu erhalten. Aus fertigungstechnischen Gründen verlaufen die Außenseiten der Stege 20 im Ausführungsbeispiel von den Kanten 22 aus ein kurzes Stück achsparallel nach vorn, bevor sie schräg nach innen verlaufen. Ein Abstand t zwischen den Kanten 22 und den Stellen, ab denen die Außenseiten der Stege 20 schräg nach innen verlaufen, ist kurz und beträgt im Ausführungsbeispiel nicht mehr als 1,5 mm und vorzugsweise 1 mm oder weniger.

An einer dem Spreizkörper 3 zugewandten Innenseite der Spreizhülse 4 weisen Übergänge von der Innenseite zu den vorderen Rändern 10 der Spreizlaschen 8 und zu dem Spreizkörper 3 zugewandten Vorderseiten der Stege 20 Rundungen R auf. Die Rundungen R sind nicht fertigungsbedingt, Radien der Rundungen R sind größer als Radien fertigungsbedingter Rundungen wären. Ein Radius der Rundungen R ist vorzugsweise 0,1 mm oder größer. Anstelle der Rundungen R können auch Fasen, das heißt abgeschrägte Flächen, an den Übergängen von der Innenseite der Spreizhülse 4 zu den vorderen Rändern 10 der Spreizlaschen 8 beziehungsweise zu den Vorderseiten der Stege 20 vorgesehen sein (nicht dargestellt). Ein Fasenwinkel der Fasen zur Längsrichtung beziehungsweise Achsrichtung der Spreizhülse 4 ist größer als die Hälfte des Konuswinkels des Spreizkörpers 3. Sowohl die Rundungen R als auch die nicht dargestellten Fasen vermeiden Kanten an der Innenseite der Spreizhülse 4 an den vorderen Rändern 10 der Spreizlaschen 8 und an den Vorderseiten der Stege 20, die sich beim Einziehen des Spreizkörpers 3 zwischen die Spreizlaschen 8 zum Aufspreizen der Spreizlaschen 8 in den Spreizkörper 3 einformen und das Einziehen des Spreizkörpers 3 zwischen die Spreizlaschen 8 und Aufspreizen der Spreizlaschen 8 behindern könnten.

Beim Aufspreizen der Spreizlaschen 8 in dem nicht dargestellten Ankerloch drückt die Lochwand die Verbindungslaschen 13 radial nach innen, so dass die Verbindungslaschen 13 in die Aussparungen 14 gelangen und die Formschlussverbindungen 16 geschaffen werden.

### Bezugszeichenliste

- α: Winkel
- R: Rundung
- t: Abstand
- 1: Spreizanker
- 2: Ankerschaft
- 3: Spreizkörper
- 4: Spreizhülse
- 5: Außengewinde
- 6: Widerlager
- 7: Längsschlitz
- 8: Spreizlasche
- 9: Spreizbereich
- 10: vorderer Rand
- 11: Verbindungssteg
- 12: Verbindungsabschnitt
- 13: Verbindungslasche
- 14: Aussparung
- 15: Spreizlaschenrand
- 16: Formschlussverbindung
- 17: Spalt
- 18: Dreh- und Schiebesicherungslasche
- 19: Öffnung
- 20: Steg
- 21: Stegabschnitt
- 22: Kante

## Patentansprüche

1. Spreizanker mit einem Spreizkörper (3) und einer Spreizhülse (4), wobei die Spreizhülse (4) einen Spreizbereich (9), in dem durch Längsschlitze (7) Spreizlaschen (8) gebildet sind, die durch Einziehen des Spreizkörpers (3) zwischen die Spreizlaschen (8) aufspreizbar sind, und einen Verbindungsabschnitt (12), der die Spreizlaschen (8) verbindet, aufweist, wobei eine Spreizlasche (8) eine Formschlussverbindung (16) mit einer benachbarten Spreizlasche (8) oder mit dem Verbindungsabschnitt (12) aufweist, die die benachbarten Spreizlaschen (8) oder die eine Spreizlasche (8) mit dem Verbindungsabschnitt (12) durch einen Formschluss in einer Längsrichtung der Spreizhülse (4) verbindet, wobei der Verbindungsabschnitt (12) an einem dem Spreizkörper (3) fernen hinteren Ende der Spreizlaschen (8) angeordnet ist, **dadurch gekennzeichnet, dass** die Spreizlaschen (8) durch Verbindungsstege (11), die in der Umfangsrichtung der Spreizhülse (4) schmaler als die Spreizlaschen (8) sind, mit dem Verbindungsabschnitt (12) der Spreizhülse (4) verbunden sind, der die Spreizlaschen (8) über die Verbindungsstege (11) miteinander verbindet.

2. Spreizanker nach Anspruch 1, **dadurch gekennzeichnet, dass** die Formschlussverbindung (16) Spiel in der Längsrichtung der Spreizhülse (4) aufweist.

3. Spreizanker nach Anspruch 1 oder 2, **dadurch gekennzeichnet, dass** die Formschlussverbindung (16) durch eine Verbindungslasche (13), die in einer Umfangsrichtung der Spreizhülse (4) von einer ersten Spreizlasche (8) absteht, und einer Aussparung (14) in einem der ersten Spreizlasche (8) zugewandten Spreizlaschenrand (15) einer benachbarten, zweiten Spreizlasche (8) und/oder in dem Verbindungsabschnitt (12), wobei die Verbindunglasche (13) in die Aussparung (14) greift, gebildet ist.

4. Spreizanker nach Anspruch 3, **dadurch gekennzeichnet, dass** die Aussparung (14) und/oder die Verbindungslasche (13) schräg zur Umfangsrichtung und zur Längsrichtung der Spreizhülse (4) verlaufende Ränder aufweisen.

5. Spreizanker nach Anspruch 3 oder 4, **dadurch gekennzeichnet, dass** die Verbindungslasche (13) und/oder die Aussparung (14) die Form eines schräg zur Umfangsrichtung und zur Längsrichtung der Spreizhülse (4) angeordneten Rechtecks aufweisen.

6. Spreizanker nach einem oder mehreren der vorhergehenden Ansprüche, **dadurch gekennzeichnet, dass** die Verbindungsstege (11) in der Umfangsrichtung der Spreizhülse (4) versetzt zu Quermitten der Spreizlaschen (8) sind.

7. Spreizanker nach einem oder mehreren der vorhergehenden Ansprüche, **dadurch gekennzeichnet, dass** die Verbindungsstege (11) in der Umfangsrichtung der Spreizhülse (4) höchstens 0,8 mal, insbesondere höchstens 0,33 mal, und vorzugsweise höchstens 0,2 mal so breit wie die Spreizlaschen (8) sind und/oder dass ein Spalt (17) zwischen den Verbindungslaschen (13) und den Aussparungen (14) in einem engsten Spaltabschnitt höchstens 0,5 mal so breit wie eine Wanddicke der Spreizhülse (4) ist und/oder dass die Verbindungslasche (13) 1/4 bis 1/3 einer Breite der Spreizlasche (8) in der Umfangsrichtung der Spreizhülse (4) von der Spreizlasche (8) absteht.

8. Spreizanker nach einem oder mehreren der vorhergehenden Ansprüche, **dadurch gekennzeichnet, dass** die Spreizhülse (4) eine Dreh- und Schiebesicherungslasche (18) aufweist, die radial nach außen über eine Mantelfläche der Spreizhülse (4) übersteht.

9. Spreizanker nach einem oder mehreren der vorhergehenden Ansprüche, **dadurch gekennzeichnet, dass** die Spreizlaschen (8) einen Steg (20) aufweisen, der durch eine Formänderung, insbesondere durch eine Biegung in Längsrichtung der Spreizhülse (4) in einer Umfangsrichtung verlängerbar ist, so dass die Spreizlaschen (8) beim Aufspreizen in der Umfangsrichtung verbreiterbar sind.

10. Spreizanker nach Anspruch 9, **dadurch gekennzeichnet, dass** die Spreizlaschen (8) mehrere in der Längsrichtung der Spreizhülse (4) zueinander versetzte Stege (20) aufweisen.

11. Spreizanker nach Anspruch 9 oder 10, **dadurch gekennzeichnet, dass** sich der Steg (20) in der Umfangsrichtung der Spreizhülse (4) erstreckt und eine Biegung und/oder eine Abwinklung in der Längsrichtung der Spreizhülse (4) aufweist.

12. Spreizanker nach einem oder mehreren der vorhergehenden Ansprüche, **dadurch gekennzeichnet, dass** die Spreizlaschen (8) eine Öffnung (19) und eine Kante (22) an einem Übergang der Öffnung (19) zu einer dem Spreizkörper (3) abgewandten Außenseite der Spreizhülse (4) aufweisen, und dass die Außenseite der Spreizhülse (4) von der Kante (22) oder in einem Abstand (t) vor der Kante (22) in Richtung des Spreizkörpers (3) schräg nach innen in Richtung einer Längsachse der Spreizhülse (4) verläuft.

13. Spreizanker nach einem oder mehreren der vorhergehenden Ansprüche, **dadurch gekennzeichnet, dass** ein Übergang von einer dem Spreizkörper (3) zugewandten Innenseite der Spreizhülse (4) zu einem dem Spreizkörper (3) zugewandten vorderen Rand (10) der Spreizhülse (4), einer Spreizlasche (8) der Spreizhülse (4) oder eines Stegs (20) einer Spreizlasche (8) der Spreizhülse (4) eine Fase oder eine Rundung (R) aufweist.

14. Verfahren mit einem Spreizanker nach einem oder mehreren der Ansprüche 3 bis 13 zur Verankerung des Spreizankers in einem Ankerloch, **dadurch gekennzeichnet, dass** die Verbindungslasche (13) der Formschlussverbindung (16) der Spreizlaschen (8) die Dreh- und Schiebesicherungslasche (18) bildet, die außerhalb des Ankerlochs radial nach außen über die Mantelfläche der Spreizhülse (4) übersteht und die bei einem Aufspreizen der Spreizlaschen (8) in dem Ankerloch von einer Lochwand des Ankerlochs in die Aussparung (14) im Spreizlaschenrand (15) der benachbarten Spreizlasche (8) gedrückt wird.

## Claims

1. An expansion anchor having an expansion body (3) and an expansion sleeve (4), wherein the expansion sleeve (4) has an expansion region (9) in which expansion tabs (8) are formed by longitudinal slots (7), which tabs can be expanded by pulling in the expansion body (3) between the expansion tabs (8), and a connecting portion (12) which connects the expansion tabs (8), wherein an expansion tab (8) has a positive connection (16) with an adjacent expansion tab (8) or with the connecting portion (12) which connects the adjacent expansion tabs (8) or which connects an expansion tab (8) to the connecting portion (12) by a positive connection in a longitudinal direction of the expansion sleeve (4), wherein the connecting portion (12) is arranged at a rear end of the expansion tabs (8) remote from the expansion body (3), **characterized in that** the expansion tabs (8) are connected by connecting webs (11), which are narrower than the expansion tabs (8) in the circumferential direction of the expansion sleeve (4), to the connecting portion (12) of the expansion sleeve (4) which connects the expansion tabs (8) to one another via the connecting webs (11).

2. The expansion anchor according to claim 1, **characterized in that** the positive connection (16) has play in the longitudinal direction of the expansion sleeve (4).

3. The expansion anchor according to claim 1 or 2, **characterized in that** the positive connection (16) is formed by a connecting tab (13) which protrudes from a first expansion tab (8) in a circumferential direction of the expansion sleeve (4), and a recess (14) in an expansion tab edge (15) of an adjacent, second expansion tab (8) facing the first expansion tab (8) and/or in the connecting portion (12), wherein the connecting tab (13) engages in the recess (14).

4. The expansion anchor according to claim 3, **characterized in that** the recess (14) and/or the connecting tab (13) has/have edges running obliquely to the circumferential direction and the longitudinal direction of the expansion sleeve (4).

5. The expansion anchor according to claim 3 or 4, **characterized in that** the connecting tab (13) and/or the recess (14) has/have the shape of a rectangle arranged obliquely to the circumferential direction and to the longitudinal direction of the expansion sleeve (4).

6. The expansion anchor according to one or more of the preceding claims, **characterized in that** the connecting webs (11) are offset in the circumferential direction of the expansion sleeve (4) to the transverse centers of the expansion tabs (8).

7. The expansion anchor according to one or more of the preceding claims, **characterized in that** the connecting webs (11) in the circumferential direction of the expansion sleeve (4) are at most 0.8 times, in particular at most 0.33 times, and preferably at most 0.2 times as wide as the expansion tabs (8), **and/or that** a gap (17) between the connecting tabs (13) and the recesses (14) in a narrowest gap portion is at most 0.5 times as wide as a wall thickness of the expansion sleeve (4), **and/or that** the connecting tab (13) protrudes 1/4 to 1/3 of a width of the expansion tab (8) in the circumferential direction of the expansion sleeve (4) from the expansion tab (8).

8. The expansion anchor according to one or more of the preceding claims, **characterized in that** the expansion sleeve (4) has a rotation and sliding locking tab (18) which protrudes radially outward beyond a lateral surface of the expansion sleeve (4).

9. The expansion anchor according to one or more of the preceding claims, **characterized in that** the expansion tabs (8) have a web (20) which can be extended in a circumferential direction by a change in shape, in particular by a bend in the longitudinal direction of the expansion sleeve (4), so that the expansion tabs (8) can be widened in the circumferential direction when expanded.

10. The expansion anchor according to claim 9, **characterized in that** the expansion tabs (8) have a plurality of webs (20) offset from one another in the longitudinal direction of the expansion sleeve (4).

11. The expansion anchor according to claim 9 or 10, **characterized in that** the web (20) extends in the circumferential direction of the expansion sleeve (4) and has a bend and/or an angulation in the longitudinal direction of the expansion sleeve (4).

12. The expansion anchor according to one or more of the preceding claims, **characterized in that** the expansion tabs (8) have an opening (19) and an edge (22) at a transition of the opening (19) to an outer side of the expansion sleeve (4) facing away from the expansion body (3), **and that** the outside of the expansion sleeve (4) extends from the edge (22) or at a distance (t) in front of the edge (22) in the direction of the expansion body (3) obliquely inward in the direction of a longitudinal axis of the expansion sleeve (4).

13. The expansion anchor according to one or more of the preceding claims, **characterized in that** a transition from an inner side of the expansion sleeve (4) facing the expansion body (3) to a front edge (10) of the expansion sleeve (4) facing the expansion body (3), an expansion tab (8) of the expansion sleeve (4) or a web (20) of an expansion tab (8) of the expansion sleeve (4) has a chamfer or a fillet (R).

14. A method having an expansion anchor according to one or more of claims 3 to 13 for anchoring the expansion anchor in an anchor hole,
**characterized in that** the connecting tab (13) of the positive connection (16) of the expansion tabs (8) forms the rotation and sliding locking tab (18) which projects radially outward beyond the lateral surface of the expansion sleeve (4) outside the anchor hole and which, when the expansion tabs (8) are expanded in the anchor hole, is pressed by a hole wall of the anchor hole into the recess (14) in the expansion tab edge (15) of the adjacent expansion tab (8).

## Revendications

1. Élément d'ancrage à expansion comportant un corps d'expansion (3) et un manchon expansible (4), dans lequel le manchon expansible (4) présente une zone d'expansion (9) dans laquelle sont formées, par des fentes longitudinales (7), des pattes expansibles (8) qui peuvent être écartées en tirant le corps d'expansion (3) entre les pattes expansibles (8), et une section de liaison (12) qui relie les pattes expansibles (8), dans lequel une patte expansible (8) présente une liaison par complémentarité de forme (16) avec une patte expansible (8) voisine ou avec la section de liaison (12), laquelle liaison relie les pattes expansibles (8) voisines ou une patte expansible (8) à la section de liaison (12) par complémentarité de forme dans une direction longitudinale du manchon expansible (4), dans lequel la section de liaison (12) est disposée au niveau d'une extrémité arrière des pattes expansibles (8) éloignée du corps d'expansion (3), **caractérisé en ce que** les pattes expansibles (8) sont reliées à la section de liaison (12) du manchon expansible (4) au moyen d'entretoises de liaison (11) qui sont plus étroites que les pattes expansibles (8) dans la direction circonférentielle du manchon expansible (4), laquelle section de liaison relie les pattes expansibles (8) entre elles par l'intermédiaire des entretoises de liaison (11).

2. Élément d'ancrage à expansion selon la revendication 1,
**caractérisé en ce que** la liaison par complémentarité de forme (16) présente un jeu dans la direction longitudinale du manchon expansible (4).

3. Élément d'ancrage à expansion selon la revendication 1 ou 2,
**caractérisé en ce que** la liaison par complémentarité de forme (16) est formée par une patte de liaison (13), laquelle fait saillie depuis une première patte expansible (8) dans une direction circonférentielle du manchon expansible (4), et un évidement (14) dans un bord de patte expansible (15), tourné vers la première patte expansible (8), d'une seconde patte expansible (8) voisine et/ou dans la section de liaison (12), dans lequel la patte de liaison (13) vient en prise dans l'évidement (14).

4. Élément d'ancrage à expansion selon la revendication 3,
**caractérisé en ce que** l'évidement (14) et/ou la patte de liaison (13) présentent des bords s'étendant en oblique par rapport à la direction circonférentielle et à la direction longitudinale du manchon expansible (4).

5. Élément d'ancrage à expansion selon la revendication 3 ou 4, **caractérisé en ce que** la patte de liaison (13) et/ou l'évidement (14) présentent la forme d'un rectangle disposé obliquement par rapport à la direction circonférentielle et à la direction longitudinale du manchon expansible (4).

6. Élément d'ancrage à expansion selon une ou plusieurs des revendications précédentes, **caractérisé en ce que** les entretoises de liaison (11) sont décalées par rapport aux centres transversaux des pattes expansibles (8) dans la direction circonférentielle du manchon expansible (4).

7. Élément d'ancrage à expansion selon une ou plusieurs des revendications précédentes, **caractérisé en ce que** les entretoises de liaison (11) sont au maximum 0,8 fois, en particulier au maximum 0,33 fois, et de préférence au maximum 0,2 fois aussi larges que les pattes expansibles (8) dans la direction circonférentielle du manchon expansible (4), et/ou **en ce qu'**une fente (17) entre les pattes de liaison (13) et les évidements (14) dans une section de fente la plus étroite est au maximum 0,5 fois aussi large qu'une épaisseur de paroi du manchon expansible (4) et/ou **en ce que** la patte de liaison (13) fait saillie depuis la patte expansible (8) de 1/4 à 1/3 d'une largeur de la patte expansible (8) dans la direction circonférentielle du manchon expansible (4).

8. Élément d'ancrage à expansion selon une ou plusieurs des revendications précédentes, **caractérisé en ce que** le manchon expansible (4) présente une patte de blocage en rotation et en coulissement (18) qui fait saillie radialement vers l'extérieur au-delà d'une surface d'enveloppe du manchon expansible (4).

9. Élément d'ancrage à expansion selon une ou plusieurs des revendications précédentes, **caractérisé en ce que** les pattes expansibles (8) présentent une entretoise (20) qui peut être allongée dans une direction circonférentielle par une modification de forme, en particulier par une flexion dans la direction longitudinale du manchon expansible (4), de sorte que les pattes expansibles (8) peuvent être élargies dans la direction circonférentielle lors de l'écartement.

10. Élément d'ancrage à expansion selon la revendication 9,
**caractérisé en ce que** les pattes expansibles (8) présentent plusieurs entretoises (20) décalées les unes par rapport aux autres dans la direction longitudinale du manchon expansible (4).

11. Élément d'ancrage à expansion selon la revendication 9 ou 10, **caractérisé en ce que** l'entretoise (20) s'étend dans la direction circonférentielle du manchon expansible (4) et présente une courbure et/ou un coude dans la direction longitudinale du manchon expansible (4).

12. Élément d'ancrage à expansion selon une ou plusieurs des revendications précédentes, **caractérisé en ce que** les pattes expansibles (8) présentent une ouverture (19) et une arête (22) au niveau d'une transition de l'ouverture (19) vers un côté extérieur du manchon expansible (4) opposé au corps d'expansion (3), et **en ce que** le côté extérieur du manchon expansible (4) s'étend, à partir de l'arête (22) ou à une distance (t) devant l'arête (22), en direction du corps d'expansion (3) en oblique vers l'intérieur en direction d'un axe longitudinal du manchon expansible (4).

13. Élément d'ancrage à expansion selon une ou plusieurs des revendications précédentes, **caractérisé en ce qu'**une transition d'un côté intérieur, tourné vers le corps d'expansion (3), du manchon expansible (4), vers un bord avant (10), tourné vers le corps d'expansion (3), du manchon expansible (4), d'une patte expansible (8) du manchon expansible (4) ou d'une entretoise (20) d'une patte expansible (8) du manchon expansible (4) présente un chanfrein ou une rondeur (R).

14. Procédé comportant un élément d'ancrage à expansion selon une ou plusieurs des revendications 3 à 13 pour l'ancrage de l'élément d'ancrage à expansion dans un trou d'ancrage, **caractérisé en ce que** la patte de liaison (13) de la liaison par complémentarité de forme (16) des pattes expansibles (8) forme la patte de blocage en rotation et en coulissement (18) qui fait saillie radialement vers l'extérieur, à l'extérieur du trou d'ancrage, au-delà de la surface d'enveloppe du manchon expansible (4) et qui, lors d'un écartement des pattes expansibles (8) dans le trou d'ancrage, est pressée par une paroi perforée du trou d'ancrage dans l'évidement (14) dans le bord de patte expansible (15) de la patte expansible (8) voisine.
